# EUROPEAN PATENT SPECIFICATION

(11) **EP 2 533 933 B1**
(45) Date of publication and mention of the grant of the patent: **31.05.2017**
(21) Application number: 11705123.5
(22) Date of filing: 11.02.2011
(51) Int. Cl.: B23K 9/10, B23K 9/32

(54) **SYSTEM FOR WELDING WITH AN EMBEDDED DATABASE ; METHODS OF CONTROLLING SUCH WELDING SYSTEM, OF MONITORING SUCH WELDING**
SYSTEM FÜR SCHWEISSEN MIT EINGEBETTETER DATENBANK, VERFAHREN ZUR STEUERUNG EINES DERARTIGEN SCHWEISSSYSTEMS, ZUR ÜBERWACHUNG EINES DERARTIGEN SCHWEISSVORGANGS
SYSTÈME DE SOUDAGE DOTÉ D'UNE BASE DE DONNÉES INTÉGRÉE ; PROCÉDÉS DE COMMANDE DUDIT SYSTÈME DE SOUDAGE ET DE CONTRÔLE DUDIT SOUDAGE

(30) Priority: 10.12.2010 US 965171; 12.02.2010 US 303729 P
(43) Date of publication of application: 19.12.2012
(73) Proprietor: Illinois Tool Works Inc., Glenview, IL 60025 (US)
(72) Inventor: CASNER, Bruce A., Glenview, Illinois 60026 (US); HAYES, L. Thomas, Glenview, Illinois 60026 (US)
(74) Representative: Wilson, Peter
(86) International application number: PCT/US2011/024443
(87) International publication number: WO 2011/100496

(56) References cited:
- US-A- 5 963 450
- US-A- 6 040 550
- US-A- 6 078 021
- US-A- 6 133 545
- US-A1- 2005 252 898
- US-A1- 2006 124 621
- US-A1- 2009 173 726

## Description

### FIELD OF THE INVENTION

The present invention relates generally to the art of welding-type power supplies. More specifically, it relates to a welding-type power supply, a method of controlling a welding-type system and a method of monitoring a welding-type system according to the preamble of claims 1, 8 and 13 (see, for example, US2005/0252898 A1).

### BACKGROUND OF THE INVENTION

There are many known welding-type systems used to provide a welding-type output or welding-type power for many known applications. Welding-type system, as used herein, includes any device capable of supplying welding, plasma cutting, and/or induction heating power including converters, inverters, choppers, resonant power supplies, quasi-resonant power supplies, etc., as well as control circuitry and other ancillary circuitry associated therewith. Welding-type output, as used herein, includes outputs suitable for welding, plasma or heating. Welding type power, as used herein, refers to welding, plasma or heating power.

Examples of prior art welding-type systems include those described in Method of Designing and Manufacturing Welding-Type Power Supplies, Albrecht, filed September 19, 2001, application number 09/956,401, which issued on March 30, 2004 as US Patent 6713721; Pendant Control for a Welding-Type System, L. Thomas Hayes, filed September 19, 2001, application number 09/956,502, which issued on October 28, 2003 as US Patent 6639182; Welding-Type Power Supply With A State-Based Controller, Holverson et al, filed September 19, 2001, application number 09/956,548, which issued on June 8, 2004 as US Patent 6747247; Welding-Type System With Network And Multiple Level Messaging Between Components, Davidson et al., filed September 19, 2001, application number 09/957,707, which issued on December 30, 2003 as US Patent 6670579; Welding-Type Power Supply With Boot Loader, L. Thomas Hayes, filed September 19, 2001, application number 09/956,405, which issued on January 7, 2003 as US Patent 6,504,131; and Welding-Type System With Robot Calibration, Rappl et al., filed September 19, 2001, application number 09/956,501, which issued on November 4, 2003 as US Patent 6642482.

Some such systems, particularly, microprocessor controlled welding-type system store numerous variables that are used to perform the weld. For example, wether Preflow is needed for a weld and if so, how long is the preflow period. Examples of other stored variables includes the process (MIG, pulse, Accupulse®, etc.), the voltages, currents, and wire feed speeds used for the process, the sequences of the weld (Arc Start, Start Power, Weld, Crater, etc.), special trigger functions such as dual schedule, trigger dual schedule, trigger program select, 4T operation, and trigger hold, and durations of each. There are also many variables saved relating to productivity records (inches of wire used, number of arc starts, amount of time spent welding, etc). These and other variables are stored and used to control the weld and sequencer, and to keep track of welder productivity.

In some prior art systems only the weld controller and simple user interface accessed these variables, and it was sufficient that they be stored in memory as unrelated information, with no organization or structure. However as these variables are accessed by other entities, such as over a network, other users, data loggers, productivity analyzers, etc, simply storing the variables in memory becomes problematic. Accordingly, a welding-type system that includes an effective way to store multiple variables, and to allow access to those variable from multiple sources, is desirable.

US 2005/0252898 A1 discloses a method for operating a welding device, in addition to a welding device comprising an energy source, especially a current source, which is controlled or regulated by means of a control device, at least one welding torch or an electrode, at least one device for detecting operating states, such as the welding temperature, and at least one calculating unit which is connected to the at least one detection device and is used to process the operating states. At least one device is used to store instructions according to which the operating states are processed and states with which the processed operating states are compared. The welding device also comprises at least one device which is connected to the calculating unit and is used to transmit messages to external receivers in such a way that associated messages can be automatically transmitted to the external receivers according to the results of said comparison.

US 2006/0124621 A1 discloses a method and apparatus for providing welding-type power that includes a source of welding-type power and a controller. The controller is a state-based controller, and/or a deterministic control module, connected to the controller output. The state-based control module includes software instructions and a digital processor, and/or a state transition table stored in a spreadsheet data base. The controller is responsive to a feedback circuit. One or more welding peripherals, such as a wire feeder or robot, are connected to the controller. The current state may be represented by data in a first line of a spreadsheet and a state-ending event by a second, perpendicular, line of a spreadsheet. The subsequent state is determined by the intersection of the first and second lines.

US 006133545 A discloses that a measured welding event is reproduced by a welding robot. Welding events are organized into a database by a three-dimensional measuring device and a data logging device, and the welding events are subjected to statistical and analytical processes, thereby producing operation data of a robot.

US 2009/0173726 A1 discloses a welding system including an arc monitoring, training, and control system. The welding system includes a power supply, controller, and associated memory. When a weld is performed, the weld command and weld feedback parameters can be stored in the memory, along with associated alarm limit values. During subsequent welds, the input weld commands and actual feedback values can be compared to the established limits, and a fault signal provided to an operator or supervisor when the value exceeds the established limits. The fault signals can be used for training operators, as well as providing monitoring signals, and can be stored with weld data in a database for later analysis. In addition, collected weld data can be used to determine when to clean, repair, or replace consumables, including, for example, contact tips, wire drive liners, and drive rolls, and to monitor usage of wire and gas.

US 6040550 A discloses a laser welding machine that includes an arbor for rotating a plurality of bellows diaphragms positioned together in side-by-side relation adjacent the laser. An optical tracker is provided for optically tracking a position of a rotating outer joint of the diaphragms as the arbor rotates. In addition, a low inertia beam steering mechanism is used for directing the laser beam to form a weld in the rotating outer joint responsive to the optical tracker. The laser may be an Nd:YAG, a diode laser, or carbon dioxide laser, for example. The optical tracker preferably includes a solid state camera and an illumination source positioned on opposite sides of the rotating outer joint to capture a shadow image of the joint. The welding machine may further include a processor and associated display operatively connected to the camera and to the beam steering means. The display may be used for displaying the shadow image of the rotating outer joint. The laser beam may be aligned horizontally, and indexing of joints and distance positioning for focusing the laser beam provided by an X-Y table.

US 6078021 A discloses a laser welding apparatus is for laser welding an inner joint between first and second bellows diaphragms. The apparatus preferably includes a first clamp having an opening therein and having portions adjacent the opening defining a first clamping surface; and a second clamp having portions defining a second clamping surface, and wherein the first and second clamps are relatively movable to clamp the first and second metal bellows diaphragms together between the first and second clamping surfaces so that the openings in the bellows diaphragms are generally aligned with the opening in the first clamp. The apparatus also preferably includes a laser for generating a laser beam, and a beam directing element positioned in the opening of the first clamp and the openings of the first and second bellows diaphragms for directing the laser beam to weld the inner joint between the first and second bellows diaphragms. The opening of the first clamp and the recess of the second clamp are preferably sized to expose a predetermined radially inwardly extending portion of the first and second bellows diaphragms to facilitate welding with the laser beam. In addition, the apparatus also preferably includes a rotating drive arrangement for relatively rotating the first and second clamps, and the laser beam directing means to weld the inner joint. A non-metallic spacer may be positioned between the bellows diaphragms.

US 5963450 A discloses an operator interface unit for monitoring and controlling controllers coupled to a communications network has a common database that is accessible across the network, regardless of each controllers data structure. The operator interface unit provides an apparatus for displaying, storing, and editing data obtained from the network. Data from each controller can be accessed by the unit based upon the individual controller's data structure and type through embedded objects resident in the interface unit's operating system and program. The data can then be displayed, edited, and stored by any data entry device that is capable of executing the operator interface unit's program.

### SUMMARY OF THE PRESENT INVENTION

According to a first aspect of the invention there is provided a welding-type system as set out in claim 1.

According to a second aspect of the invention there is provided a method of controlling a welding-type system as set out in claim 8.

According to a third aspect of the invention there is provided a method of monitoring a welding-type system as set out in claim 13.

Other principal features and advantages of the invention will become apparent to those skilled in the art upon review of the following drawings, the detailed description and the appended claims.

### BRIEF DESCRIPTION OF THE DRAWINGS

Figure 1 is a welding-type system in accordance with the preferred embodiment of the present invention; and
Figure 2 is block diagram in accordance with the preferred embodiment of the present invention.
Before explaining at least one embodiment of the invention in detail it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting. Like reference numerals are used to indicate like components.

### DETAILED DESCRIPTION OF THE PREFERRED EMBODIMENTS

While the present invention will be illustrated with reference to a particular welding-type system it should be understood at the outset that the DBMS can be used with other welding-type systems.

The preferred embodiment provides for implementing the invention with the Miller Axcess® or Miller Axcess E® welding power supply. The welding-type system includes a control module with an embedded database. Module, as used herein, includes software and/or hardware that cooperates to perform one or more tasks, and can include digital commands, control circuitry, power circuitry, networking hardware, etc.

A database is a structured collection of records or data that is stored in a digital system. A database preferably is able to store large amounts of records and be accessed easily. In addition, new information and changes should also be fairly easy to input. An efficient database system often incorporates a program that manages the queries and information stored on the system. This is referred to as DBMS or a database management system.

DBMSs are designed to provide the ability to store, manage and retrieve information through the use of tables. Tables are made up of columns and rows. Each column contains a different attribute, whereas each row represents a single record. This allows data to be organized and stored in meaningful ways.

An embedded database system is, according to the present invention, a database management system (DBMS) which is tightly integrated with an application software that requires access. The embedded database is preferably either available commercially, or compatible therewith, to make it easier for the programmer, designer, and/or user to learn and use the database. The welding-type system can include an OS, particularly an off the shelf operating system. Alternatives include using a custom DBMS, and using a DBMS that is not embedded, and/or resides outside the weld controller, such as on a PC in the weld cell or networked to the weld cell. The DMBS is still considered part of the welding system controller, as controller is used herein, when the DMBS is located on a PC or remotely on a network.

As explained above, some microprocessor controlled weld controller have numerous stored variables used to perform the weld. Having an embedded database to organize these variables into tables allows users to access them in a more structured manner. Also, the program that manages the database queries allows access by multiple users and helps insure that either all of the tasks of a transaction (such as a weld cycle) are performed or none of them are.

Using a DBMS and/or an embedded database helps insure that other operations by another user cannot access or see the data in an intermediate state during a transaction. (Intermediate state refers to data that is in the process of being modified). This can be more important as additional users access these variables, and the probability that two users will be trying to change the same variable at the same time increases. Database programs are designed to handle multiple users and guarantee that transactions will be handled completely and independently from the previous/next transaction

The DBMS, because of it's flexibility, allows each user to execute specific queries returning only the specific data that the user needs as defined by the query. While a table may contain many columns, if the user does not need all of them they will not be bothered with the extra data. DBMSs are also designed to handle large amounts of data.

Moreover, when an application exits or fails, all information remains stored in the database. Since the database is a file within the OS if there is a hardware failure the data within the database can usually be recovered.

Some weld cells require the use of a pc (personal computer). If there is a pc within the cell the DBMS could reside on the pc instead of being embedded. Also, if the weld cell is networked, the DBMS could reside on the network.

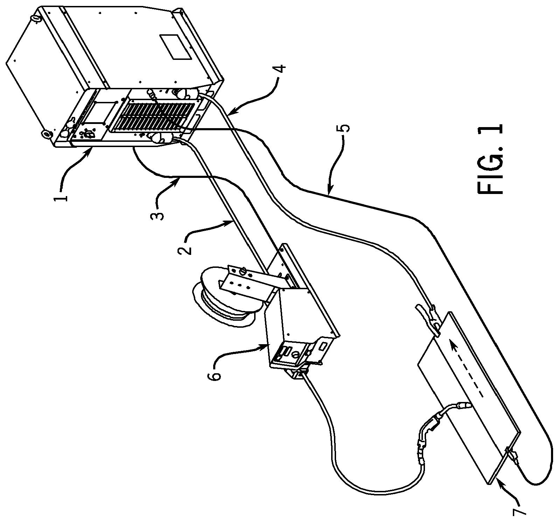

Referring to Figure 1, a welding-type system 100 includes a power supply 1, and a wire feeder 6, which cooperate to provide power over a pair of weld cables 2 and 4 to a workpiece 7. Feeder cable 3 and a voltage sense cable 5 are used for control/feedback. The system shown is an Axcess® welding system, but the invention may readily be implemented with other welding-type systems.

Welding system 100 performs generally as prior art welding systems, but includes an embedded database. Preferably, the database stores and allows access to one or more of the process being used (MIG, pulse, Accupulse®, etc.), the voltages, currents, and wire feed speeds used for the process, the sequences of the weld (Arc Start, Start Power, Weld, Crater, etc.), special trigger functions such as dual schedule, trigger dual schedule, trigger program select, 4T operation, and trigger hold, and durations of each, as well as other variables known in such welding operations. Data that is stored in the database may include commanded or fedback welding data such as welding current, voltage, welding time, ramp rates, wire feed speed, etc, as well as errors, faults, alerts, etc.

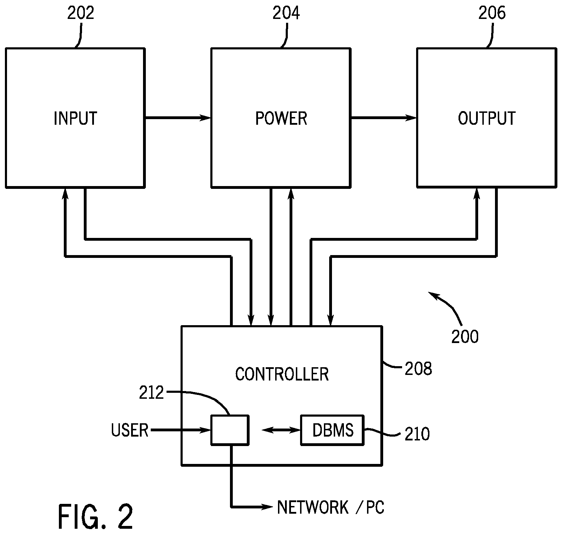

Referring now to Figure 2, a diagram shows a welding-type system 200 includes an input circuit 202, a power circuit 204, and an output 206, as well as a controller 208. Circuits 202, 204 and 206, and controller 208, are, according to the present invention, part of welding power supply 1 (Figure 1) in the preferred embodiment. Circuits 202, 204 and 206, and controller 208 are functional blocks and need not be physically distinct circuits.

Circuits 202, 204 and 206, can be consistent with those shown in USP 6329636, entitled Method And Apparatus For Receiving A Universal Input Voltage In A Welding, Plasma Or Heating Power Source, issued December 11, 2001. Accordingly, circuits 202, 204 and 206 may include circuitry to rectify, boost, power factor correct, invert and transform different input powers into welding-type power.

Controller 208 includes much of the control circuitry of the prior art, including that used to turn switches on and off circuits 202, 204 and 206. This switch control circuitry can be implemented with other control circuitry, including digital, analog, and include micro processors, DSPs, analog circuitry, etc. Also, controller 208 preferably includes circuitry to monitor and/or log operating date.

In accordance with the invention a database module 210 includes a DBMS, and is preferably embedded into welding-type system 200. According to the present invention, the database is embedded, and located inside of the controller 208, in the weld cell, or on a network connected to the weld cell.

In operation module 210 stores the variable listed above (and can store only some of them, or additional variables in other embodiments). When controller 208 needs to access the variable, it does so using module 210. Also, module 210 allows the user, designer or engineer to change the variables if needed using a user input 212, locally or remotely, as described below.

Various alternatives provide that welding-type system 100 includes network communication, such as WAN, LAN, over power lines, over a smart grid, and that the data transmitted and/or stored, such as on a USB drive, include arc parameters and primary information, such as harmonics data, utilization data, etc. The information can be stored in the database, and it or other information in or not in the database can be shared over the network or using a drive with end users, power companies, manufacturers that use welders, manufactures that supply welders, etc. Additionally, various alternatives and arrangements are shown in the attached appendix.

Numerous modifications may be made to the present invention which still fall within the intended scope hereof. Thus, it should be apparent that there has been provided in accordance with the present invention a welding-type system, a method of controlling a welding-type system and a method of monitoring a welding-type system, an embedded database, preferably with a DBMS that fully satisfies the objectives and advantages set forth above. Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A welding-type system (200) including a source of power (1), and a weld controller (208), **characterised in that** the controller (208) is part of the source of power (1), and further **characterised in that** the weld controller (208) includes an embedded database (210) comprising a database management system which is tightly integrated with the weld controller (208) that requires access to the database (210) to control the welding process, and the embedded database (210) is located inside the weld controller (208).

2. The system of claim 1, wherein the database (210) includes as data stored variables used to perform the weld; and/or
the data is located in a file networked to a welding-type system (200); and/or
the embedded database (210) includes data relating to one or more one welding processes, one or more of commanded welding voltages, welding current, wire feed speed, and one or more welding sequences.

3. The welding-type system (200) of claim 2, wherein the database (210) includes data organized in a plurality of columns and rows.

4. The welding-type system (200) of claim 3, wherein the database (210) is arranged to provide for queries from multiple users, and, optionally, the data cannot be accessed in an intermediate state.

5. The welding-type system (200) of claim 4, wherein the database (210) includes data located in a file in an operating system.

6. The welding-type system (200) of claim 4, wherein the database (210) includes data related to one or more fedback welding parameters of current, voltage, welding time, ramp rates and wire feed speed.

7. The welding-type system (200) of claim 5, including a user input (212) connected to the database (210), wherein the user can change the data, and, optionally, the user input is further connected to a network.

8. A method of controlling a welding-type system (200), **characterised by**:
storing data in an embedded database (210), wherein the embedded database (210) includes a database management system which is tightly integrated with a weld controller (208) that requires access to the database (210) to control the welding process, and the embedded database (210) is located inside the weld controller (208);
accessing the stored data using the welding controller (208), the welding controller (208) being part of a welding-type power source (1); and
controlling the output of the welding-type power source (1) in response to the data accessed.

9. The method of claim 8, wherein storing includes storing data in a file in an operating system (200); and/or
storing includes storing data in a file located on a personal computer; and/or
storing includes storing data in a file located on network connected to the welding type system; and/or
accessing includes accessing data in a file located on network connected to the welding type system; and/or
storing data includes storing data relating to more than one welding parameter; and
accessing includes accessing data for at least a selected one welding parameter.

10. The method of claim 8, wherein:
storing data includes storing data relating to more than one welding process;
accessing includes accessing data for a selected one welding process; and
controlling includes controlling the output to be the selected welding process.

11. The method of claim 8, wherein:
storing data includes storing data relating to more than one welding sequence;
accessing includes accessing data for at least one selected welding sequences; and
controlling includes controlling the output to provide the at least one selected welding sequence.

12. The method of claim 8, including receiving a user input and changing the data in response to the user input; and/or
including receiving a user input over network and changing the data in response to the user input.

13. A method of monitoring a welding-type system (200), **characterised by** monitoring data and storing the data in an embedded database (210), wherein the embedded database (210) includes a database management system which is tightly integrated with a weld controller (208) that requires access to the database (210) to control the welding process, the embedded database (210) is located inside the weld controller (208) and the weld controller (208) is part of a source of power (1).

14. The method of claim 13, wherein monitoring data includes monitoring at least one of commanded or fed back data.

## Patentansprüche

1. Schweißsystem (200) mit einer Stromquelle (1) und einem Schweißcontroller (208), **dadurch gekennzeichnet, dass** der Controller (208) Teil der Stromquelle (1) ist, und weiterhin **dadurch gekennzeichnet, dass** der Schweißcontroller (208) eine eingebettete Datenbank (210) enthält, die ein Datenbankmanagementsystem umfasst, das eng mit dem Schweißcontroller (208) integriert ist, das Zugang zu der Datenbank (210) erfordert, um den Schweißprozess zu steuern, und die eingebettete Datenbank (210) sich in dem Schweißcontroller (208) befindet.

2. System nach Anspruch 1, wobei die Datenbank (210) als Daten gespeicherte Variablen enthält, die zum Durchführen der Schweißung verwendet werden; und/oder
die Daten sich in einer an ein Schweißsystem (200) vernetzten Datei befinden; und/oder
die eingebettete Datenbank (210) Daten bezüglich eines oder mehrerer Schweißprozesse, eines oder mehreren von befohlenen Schweißspannungen, Schweißstrom, Drahtvorschubgeschwindigkeit und einer oder mehreren Schweißsequenzen enthält.

3. Schweißsystem (200) nach Anspruch 2, wobei die Datenbank (210) in mehrere Spalten und Zeilen organisierte Daten enthält.

4. Schweißsystem (200) nach Anspruch 3, wobei die Datenbank (210) ausgelegt ist, um sich um Anfragen von mehreren Benutzern zu kümmern, und optional auf die Daten nicht in einem Zwischenzustand zugegriffen werden kann.

5. Schweißsystem (200) nach Anspruch 4, wobei die Datenbank (210) in einer Datei in einem Betriebssystem befindliche Daten enthält.

6. Schweißsystem (200) nach Anspruch 4, wobei die Datenbank (210) Daten bezüglich eines oder mehrerer rückgekoppelter Schweißparameter von Strom, Spannung, Schweißzeit, Anstiegsraten und Drahtvorschubgeschwindigkeit enthält.

7. Schweißsystem (200) nach Anspruch 5, mit einem mit der Datenbank (210) verbundenen Benutzereingang (212), wobei der Benutzer die Daten ändern kann, und optional der Benutzereingang weiter mit einem Netzwerk verbunden ist.

8. Verfahren zum Steuern eines Schweißsystems (200), **gekennzeichnet durch**:
Speichern von Daten in einer eingebetteten Datenbank (210), wobei die eingebettete Datenbank (210) ein Datenbankmanagementsystem enthält, das eng mit dem Schweißcontroller (208) integriert ist, das Zugang zu der Datenbank (210) erfordert, um den Schweißprozess zu steuern, und die eingebettete Datenbank (210) sich in dem Schweißcontroller (208) befindet;
Zugreifen auf die gespeicherten Daten unter Verwendung des Schweißcontrollers (208), wobei der Schweißcontroller (208) Teil einer Schweißstromquelle (1) ist; und
Steuern des Ausgangs der Schweißstromquelle (1) als Reaktion auf die Daten, auf die zugegriffen wurde.

9. Verfahren nach Anspruch 8, wobei das Speichern das Speichern von Daten in einer Datei in einem Betriebssystem (200) beinhaltet; und/oder
das Speichern das Speichern von Daten in einer auf einem Personal Computer befindlichen Datei beinhaltet; und/oder
das Speichern das Speichern von Daten in einer auf einem Netzwerk befindlichen Datei beinhaltet, das mit dem Schweißsystem verbunden ist; und/oder
das Zugreifen das Zugreifen auf Daten in einer sich auf einem Netzwerk befindlichen Datei beinhaltet, das mit dem Schweißsystem verbunden ist; und/oder
das Speichern von Daten das Speichern von Daten bezüglich mehr als einem Schweißparameter beinhaltet; und
das Zugreifen das Zugreifen auf Daten für mindestens einen gewählten Schweißparameter beinhaltet.

10. Verfahren nach Anspruch 8, wobei
das Speichern von Daten das Speichern von Daten bezüglich mehr als einem Schweißprozess beinhaltet;
das Zugreifen das Zugreifen auf Daten für einen gewählten Schweißprozess beinhaltet; und
das Steuern das Steuern des Ausgangs derart beinhaltet, dass er der gewählte Schweißprozess ist.

11. Verfahren nach Anspruch 8, wobei:
das Speichern von Daten das Speichern von Daten bezüglich mehr als einer Schweißsequenz beinhaltet;
das Zugreifen das Zugreifen auf Daten für mindestens eine gewählte Schweißsequenz beinhaltet; und
das Steuern das Steuern des Ausgangs zum Bereitstellen der mindestens einen gewählten Schweißsequenz beinhaltet.

12. Verfahren nach Anspruch 8, mit dem Empfangen einer Benutzereingabe und Ändern der Daten als Reaktion auf die Benutzereingabe; und/oder
mit dem Empfangen einer Benutzereingabe über ein Netzwerk und Ändern der Daten als Reaktion auf die Benutzereingabe.

13. Verfahren zum Überwachen eines Schweißsystems (200), **gekennzeichnet durch** das Überwachen von Daten und Speichern der Daten in einer eingebetteten Datenbank (210), wobei die eingebettete Datenbank (210) ein Datenbankmanagementsystem enthält, das eng mit dem Schweißcontroller (208) integriert ist, das Zugang zu der Datenbank (210) erfordert, um den Schweißprozess zu steuern, und die eingebettete Datenbank (210) sich in dem Schweißcontroller (208) befindet und der Schweißcontroller (208) Teil einer Stromquelle (1) ist.

14. Verfahren nach Anspruch 13, wobei das Überwachen von Daten das Überwachen mindestens eines von befohlenen oder rückgekoppelten Daten beinhaltet.

## Revendications

1. Système de type soudage (200) comportant une source d'alimentation (1), et un contrôleur de soudage (208), **caractérisé en ce que** le contrôleur (208) fait partie de la source d'alimentation (1), et **caractérisé en outre en ce que** le contrôleur de soudage (208) comporte une base de données incorporée (210) comprenant un système de gestion de base de données qui est fortement intégré avec le contrôleur de soudage (208) qui a besoin d'un accès à la base de données (210) pour contrôler le procédé de soudage, et la base de données incorporée (210) est située à l'intérieur du contrôleur de soudage (208).

2. Système de la revendication 1, dans lequel la base de données (210) comporte comme données des variables stockées utilisées pour effectuer la soudure ; et/ou
les données sont situées dans un fichier en réseau avec un système de type soudage (200) ; et/ou
la base de données incorporée (210) comporte des données relatives à un ou plusieurs procédés de soudage, une ou plusieurs tensions de soudage commandées, un courant de soudage, une vitesse d'avance de fil, et une ou plusieurs séquences de soudage.

3. Système de type soudage (200) de la revendication 2, dans lequel la base de données (210) comporte des données organisées en une pluralité de colonnes et de rangées.

4. Système de type soudage (200) de la revendication 3, dans lequel la base de données (210) est agencée pour répondre à des requêtes de multiples utilisateurs et, éventuellement, les données ne sont pas accessibles dans un état intermédiaire.

5. Système de type soudage (200) de la revendication 4, dans lequel la base de données (210) comporte des données situées dans un fichier dans un système d'exploitation.

6. Système de type soudage (200) de la revendication 4, dans lequel la base de données (210) comporte des données associées à un ou plusieurs paramètres de soudage renvoyés parmi le courant, la tension, le temps de soudage, les vitesses de rampe et la vitesse d'avance de fil.

7. Système de type soudage (200) de la revendication 5, comportant une saisie utilisateur (212) reliée à la base de données (210), dans lequel l'utilisateur peut modifier les données et, éventuellement, la saisie utilisateur est en outre reliée à un réseau.

8. Procédé de contrôle d'un système de type soudage (200), **caractérisé par** :
le stockage de données dans une base de données incorporée (210), la base de données incorporée (210) comportant un système de gestion de base de données qui est fortement intégré avec un contrôleur de soudage (208) qui a besoin d'un accès à la base de données (210) pour contrôler le procédé de soudage, et la base de données incorporée (210) étant située à l'intérieur du contrôleur de soudage (208) ;
l'accès aux données stockées au moyen du contrôleur de soudage (208), le contrôleur de soudage (208) faisant partie d'une source d'alimentation de type soudage (1) ; et
le contrôle de la sortie de la source d'alimentation de type soudage (1) en réponse aux données consultées.

9. Procédé de la revendication 8, dans lequel le stockage comporte le stockage de données dans un fichier dans un système d'exploitation (200) ; et/ou
le stockage comporte le stockage de données dans un fichier situé sur un ordinateur personnel ; et/ou
le stockage comporte le stockage de données dans un fichier situé sur un réseau relié au système de type soudage ; et/ou
l'accès comporte l'accès à des données dans un fichier situé sur un réseau relié au système de type soudage ; et/ou
le stockage de données comporte le stockage de données relatives à plusieurs paramètres de soudage ; et
l'accès comporte l'accès à des données pour au moins un paramètre de soudage sélectionné.

10. Procédé de la revendication 8, dans lequel :
le stockage de données comporte le stockage de données relatives à plusieurs procédés de soudage ;
l'accès comporte l'accès à des données pour un procédé de soudage sélectionné ; et
le contrôle comporte le contrôle de la sortie pour qu'elle soit le procédé de soudage sélectionné.

11. Procédé de la revendication 8, dans lequel :
le stockage de données comporte le stockage de données relatives à plusieurs séquences de soudage ;
l'accès comporte l'accès à des données pour au moins une séquence de soudage sélectionnée ; et
le contrôle comporte le contrôle de la sortie pour délivrer l'au moins une séquence de soudage sélectionnée.

12. Procédé de la revendication 8, comportant la réception d'une saisie utilisateur et la modification des données en réponse à la saisie utilisateur ; et/ou
comportant la réception d'une saisie utilisateur sur un réseau et la modification des données en réponse à la saisie utilisateur.

13. Procédé de surveillance d'un système de type soudage (200), **caractérisé par** la surveillance de données et le stockage des données dans une base de données incorporée (210), la base de données incorporée (210) comportant un système de gestion de base de données qui est fortement intégré avec un contrôleur de soudage (208) qui a besoin d'un accès à la base de données (210) pour contrôler le procédé de soudage, la base de données incorporée (210) étant située à l'intérieur du contrôleur de soudage (208) et le contrôleur de soudage (208) faisant partie d'une source d'alimentation (1).

14. Procédé de la revendication 13, dans lequel la surveillance de données comporte la surveillance de données commandées et/ou renvoyées.
